# EUROPEAN PATENT SPECIFICATION

(11) **EP 2 725 564 B1**
(45) Date of publication and mention of the grant of the patent: **01.11.2023**
(21) Application number: 13195917.3
(22) Date of filing: 05.12.2013
(51) Int. Cl.: G08B 13/19, G08B 13/191, G08C 17/02, G08B 21/22

(54) **Occupancy Sensor**
Insassensensor
Détecteur d'occupation

(30) Priority: 10.10.2012 GB 201218199
(43) Date of publication of application: 30.04.2014
(73) Proprietor: Read, Dale, Stanford-le-hope, Essex SS17 8HH (GB)
(72) Inventor: Read, Dale, Stanford-le-hope, Essex SS17 8HH (GB)
(74) Representative: Dolleymores

(56) References cited:
- EP-A1- 1 482 464
- EP-A2- 0 838 792
- WO-A1-98/34206
- WO-A1-2007/011207
- CA-A1- 2 773 507
- US-A1- 2010 052 574
- US-B1- 6 587 049

## Description

The present disclosure relates to an occupancy sensor. Preferably, it further relates to an automated occupancy monitoring system comprising one or more occupancy sensors and at least one data gathering unit.

Office space is increasingly expensive both in terms of property costs (rent, etc.) and utility costs (electricity, etc.). With the advent of mobile computing and telecommunications solutions workers spend an increasing amount of time away from their desks and furthermore are not limited to the use of a specific desk. Companies are increasingly looking at ways of optimizing the use of office space by employees to limit the overall required office space and the costs associated therewith. The starting point of any space optimization is the gathering of data by monitoring the workplace. Traditionally, such monitoring has been conducted manually by individuals. Such methods are, however, laborious, costly and inaccurate.

Whilst there are various technologies available that are provided to sense people movement, no suitable low cost sensor has been provided that is suitable for use as part of an automated occupancy monitoring system.

Prior art sensors are known from WO98/34206, US2010/052574, EP0838792, EP1482464 and US6587049, CA2773507 and WO 2007/011207.

The present invention arose in a bid to provide an improved apparatus for automatically and accurately sensing occupancy.

The invention is defined by independent claim 1.

According to the present invention, in a first aspect, there is provided an occupancy sensor as recited by claim 1.

The occupancy sensor allows for compensation of changes in ambient temperature to ensure accurate detection of warm bodies.

The IR sensor is preferably configured such that its field of view is below the desk surface out beyond the rear edge of the desk surface by a predetermined distance. The predetermined distance may be up to 800mm.

According to the present invention in another aspect, there is provided an automated occupancy monitoring system comprising one or more occupancy sensors as detailed above and at least one data gathering unit, the data gathering unit and the occupancy sensor(s) being arranged to be in wireless communication with one another.

Non-limiting embodiments will now be described, by way of example only, with reference to the accompanying drawings, in which:
Figure 1 shows an exemplary occupancy sensor according to the present invention;
Figure 2 shows the occupancy sensor of Figure 1 mounted to a desk for monitoring occupancy of the desk;
Figure 3 shows an exemplary plot of occupancy data received from the occupancy sensor of Figure 1; and
Figure 4 shows, schematically, an exemplary configuration of an automated occupancy monitoring system using plural occupancy sensors of Figure 1.

According to a first arrangement, there is provided an occupancy sensor 1 comprising a passive infrared sensor (PIR sensor), an infrared sensor (IR sensor), and an ambient temperature sensor. The occupancy sensor is configured to confirm occupancy (or lack of occupancy) in dependence on signals measured by all of the sensors, preferably in dependence on signals measured by all of the sensors simultaneously.

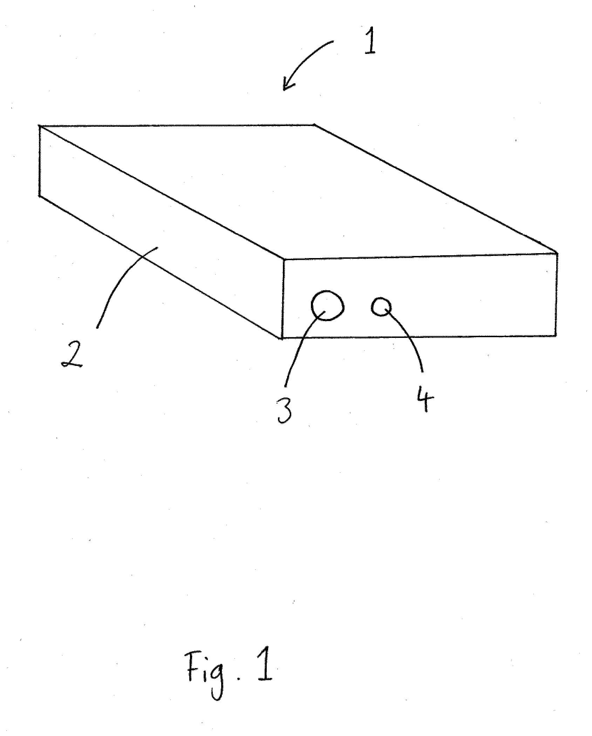

The sensors that combine to form the occupancy sensor are housed in a self contained housing that is suitable for mounting in any area in which it is desired to monitor occupancy. The housing may comprise a substantially box-like housing 2 as shown in Figure 1. The housing is preferably 80mm x 80mm x 20mm or smaller. The housing is preferably provided with suitable attachment means (not shown) for attaching it to any desired structure or surface. The attachment means may comprise screw holes, adhesive pads, etc.

The housing includes the necessary circuitry for any sensors that are present, a power source, a microprocessor and communications circuitry, which comprises a radio, for providing a wireless link with a data gathering unit. The power source preferably comprises one or more batteries.

The PIR sensor and the IR sensor face in the same direction as one another. Suitable openings 3, 4 may be provided in the housing for the PIR sensor and the IR sensor and ambient temperature sensor.

One half of the PIR sensor is shielded to enhance the swing of the PIR sensor and the detection of an approaching person. The shielding is effected by covering half of the PIR sensor, eg in black tape or black paint, or using any other means as will be readily appreciated by those skilled in the art.

The IR sensor and ambient temperature sensor may be combined in a single package. An exemplary suitable combined sensor package is model no. ZTP-135SR available from GE. An exemplary suitable PIR sensor is IRS-B210ST01 available from muRata. It will be readily appreciated by those skilled in the art that various alternative IR, ambient temperature and PIR sensors may be used.

The PIR sensor detects movement only. It does not detect presence. The IR sensor measures temperature but does not detect people. It is the unique combination of sensors in the occupancy sensor which, with the correct processing, detects occupancy.

High positive values sensed by the PIR sensor indicate a person approaching the occupancy sensor (indicating an OCCUPIED state) whilst high negative values indicate a person moving away from the occupancy sensor (indicating an UNOCCUPIED state).

The IR sensor is arranged to sense the presence (or absence) of warm bodies. When there is no warm body occupying the area covered by the IR sensor, the IR sensor will only sense (i.e. will only "see") the ambient conditions (indicating an UNOCCUPIED state). When there is a warm body occupying the area covered by the IR sensor, the IR levels sensed by the IR sensor will be above those sensed under ambient conditions (i.e. the IR sensor will "see" the warm body - indicating an OCCUPIED state). In some arrangements, the IR sensor may be mounted is such a way that its field of view is out to a range of 300mm to 800mm, however, this may be tailored to suit the situation and the area to be monitored.

The ambient temperature sensor comprises a thermistor. The ambient temperature sensor is configured to monitor ambient temperature. By monitoring the ambient temperature using a thermistor, and converting this into a value that is subtracted from the IR value sensed by the IR sensor, inaccuracies in the IR value arising from a change in the temperature in the electronics through the day or in the air temperature, or otherwise, may be neutralized and the overall accuracy of the occupancy sensor may be increased.

The PIR sensor and the IR sensor are each used, independently, to provide an indication of an OCCUPIED or UNOCCUPIED state and not a confirmation of the state. Confirmation of an OCCUPIED or UNOCCUPIED state is achieved only when the values sensed by the PIR sensor and the values sensed by the IR sensor are considered in combination with one another.

Under the control of software, an automated occupancy monitoring system, which incorporates the occupancy sensor, may be configured to "learn" changing conditions sensed by the IR sensor (and the PIR sensor) to confirm an OCCUPIED or UNOCCUPIED state.

IR values at or below ambient indicate the absence of a warm body. These taken in combination with a negative PIR value will confirm an UNOCCUPIED state.

Conversely, IR values above ambient indicate the presence of a warm body. These taken in combination with a positive PIR value will confirm an OCCUPIED state.

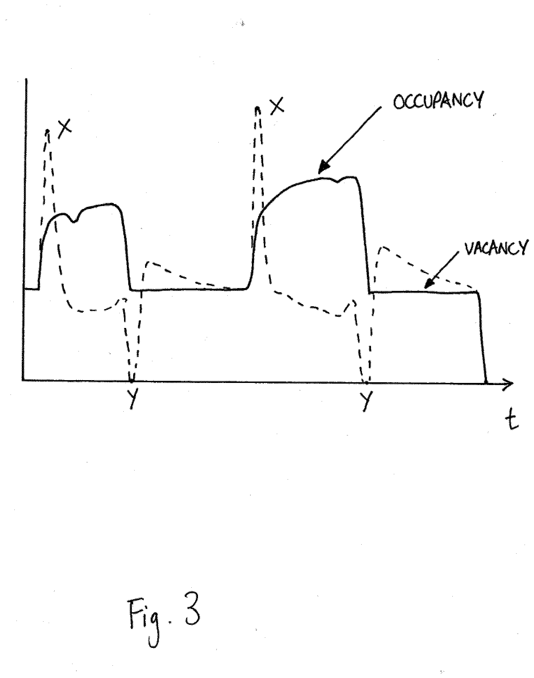

Figure 3 shows an example plot from an occupancy sensor, the dashed line represents a trace from a PIR sensor and the solid line represents a trace from an IR sensor against time. The points X are representative of an IN EVENT (person approaching) and the points Y are representative of an OUT EVENT (person moving away). The OCCUPIED state and UNOCCUPIED state determined by considering both traces together are shown by the labels OCCUPANCY and VACANCY respectively.

The microprocessor within the occupancy sensor is arranged to run the software and to thereby control the occupancy sensor. It processes the data received from the IR and PIR sensors to generate an OCCUPIED or UNOCCUPIED signal for transmission using the communication circuitry.

The occupancy sensor is an ultra-low power device. The microprocessor is configured such that the occupancy sensor is normally switched off. Under control of the microprocessor, the occupancy sensor will switch on ("wake") intermittently and for a predetermined period of time that is shorter than the intermittent period during which it is switched off. The occupancy sensor may, for example switch on and remain on for up to 5 milliseconds per second, preferably for 2 to 3 milliseconds per second.

When switched on, the occupancy sensor will process the signals from the IR sensor and PIR sensor. The occupancy sensor runs analysis software that is capable of receiving the data sensed by each of the sensors, combining the sensed values of the PIR sensor, the IR sensor and the ambient temperature sensor and providing an OCCUPIED and UNOCCUPIED signal for transmission.

The software is preferably further configured to monitor the operational and battery statuses of the occupancy sensor and to control the radio frequency (RF) functionality of the sensor. Under the control of the software, the occupancy sensor will preferably transmit a signal to a data gathering unit only when a change of state occurs (i.e. only when the detected state changes from OCCUPIED to UNOCUPPIED or vice versa).

The steps of switching the occupancy sensor on and off and only transmitting a wireless signal when there is a change of state each assist in significantly extending the battery life of the occupancy sensor.

Any number of the occupancy sensors may be provided which are operatively linked to one or more data gathering units that are provided to receive and process data received from the occupancy sensors, and which together with the occupancy sensors form an automated occupancy monitoring system.

The occupancy sensors are each preferably linked to one of the data gathering units by the communications circuitry through a low power wireless network (iLan). Most preferably, each occupancy sensor is provided with a low power microprocessor unit that provides communication at a frequency of 315, 433, 868 or 915 MHz.

In order to provide a low cost solution, it is preferred that each of the occupancy sensors has its own unique PIR, IR and thermistor outputs. This is as opposed to the sensors of all of the occupancy sensors being configured to have set reference or trigger values. The software, by considering the outputs of all of the sensors of each of the occupancy sensors in combination will accurately determine an OCCUPIED or UNOCCUPIED state for each occupancy sensor in a controlled situation and without the requirement for pre-configuration of the sensors. In light of the control implemented there is no requirement for pre-calibration of the individual occupancy sensors, which again helps to reduce the cost of implementation.

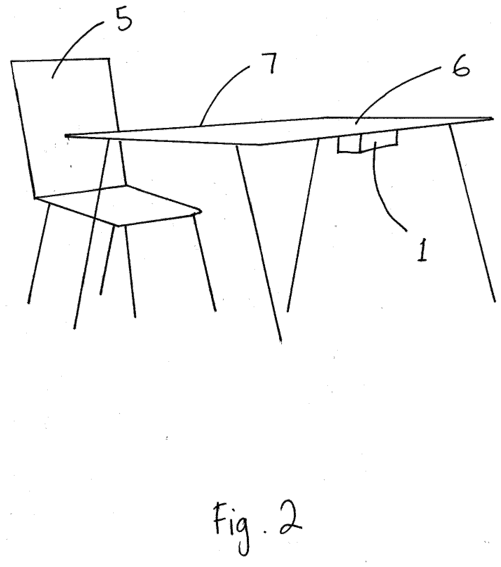

One particular, non-limiting, use of the occupancy sensor of the present invention is to detect occupancy at desks. In this arrangement, a plurality of occupancy sensors may be provided with a sensor arranged under the desk surface of each desk that is to be monitored. A monitored desk is shown in Figure 2. Each of the occupancy sensors is arranged to face back towards the chair 5 (i.e. each occupancy sensor is oriented such that the PIR and IR sensors face back towards the chair). The IR sensor here is preferably mounted in such a way that its field of view is below the desk surface out beyond the rear edge 7 of the desk surface 6 to sense a person sitting behind the desk. The field of view may extend out beyond the rear edge of the desk surface by a distance of up to 800mm, most preferably in a range of 500mm to 800mm.

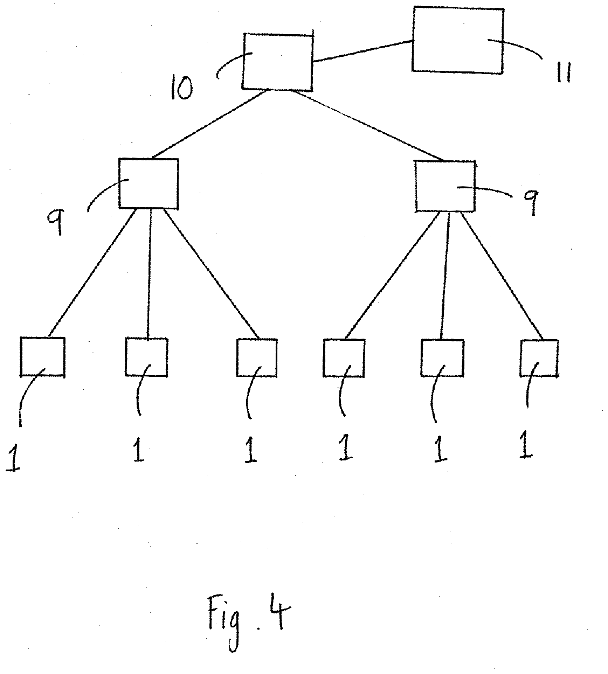

With reference to Figure 4, the data gathering units in the above described embodiment and/or in alternative embodiments may comprise one or more servers 11. These servers may comprise PCs as will be readily appreciated by those skilled in the art. The signals from the occupancy sensors 1 are received wirelessly by one or more data harvesters 10 and passed to a respective server 11 through a wired or wireless data link, such as a TCP/IP XML link. The data harvester(s) may receive wireless signals from the occupancy sensors directly or via data gatherers 9. In arrangements where the data harvesters receive signals directly from the occupancy sensors, the data gatherers will be omitted. Data gatherers 9 may be used to boost the range of the wireless signals from the occupancy sensors, which are preferably low powered devices to provide lengthy operation from their batteries. Such data gatherers may, for example, comprise wall mounted units that receive wireless signals from multiple local desk mounted occupancy sensors.

Note that the lines joining the elements of Figure 4 represent data links, which are all preferably wireless and may conform to any suitable known protocols as will be readily appreciated by those skilled in the art. Whilst six occupancy sensors are shown connected to two data gatherers, more or less occupancy sensors may be provided and more or less occupancy sensors may be connected to each data gatherer, where provided. The arrangement of Figure 4 is exemplary only and should not be considered limiting in any way. Numerous other configurations will be readily appreciated by those skilled in the art.

## Claims

1. An occupancy sensor (1) **characterised by** comprising passive infrared sensor, PIR sensor, configured to sense values indicative of a person approaching or moving away from the occupancy sensor, and an infrared sensor, IR sensor, configured to detect the presence or absence of warm bodies, the occupancy sensor being configured to confirm occupancy or non-occupancy in dependence on signals measured by both the PIR sensor and the IR sensor wherein one half of the PIR sensor is shielded by covering half of the PIR sensor, wherein an ambient temperature sensor comprising a thermistor is further provided, adapted to monitor the ambient temperature and convert this into a value that is subtracted from the IR value sensed by the IR sensor, to neutralize inaccuracies in the IR value caused by a change in temperature.

2. An occupancy sensor as claimed in claim 1, wherein measurements taken from all sensors are combined for confirmation of occupancy or non-occupancy.

3. An occupancy sensor as claimed in any preceding claim, which comprises one or more batteries as the only power source.

4. An occupancy sensor as claimed in any preceding claim, which comprises wireless communication means, which are arranged such that the occupancy sensor may transmit a signal regarding occupancy to a remote device.

5. An occupancy sensor as claimed in any preceding claim comprising a microprocessor, which is arranged to run a software package for controlling the operation of the occupancy sensor.

6. An occupancy sensor as claimed in any preceding claim, wherein the occupancy sensor is configured such that it is ordinarily switched off, switching on intermittently for a predetermined period of time, which is shorter than the intermittent period during which it is switched off, to monitor the signals sensed by the sensors.

7. An occupancy sensor as claimed in Claim 6, wherein the occupancy sensor is configured to switch on for 5 milliseconds or less per second.

8. An occupancy sensor as claimed in any of Claims 5 to 7, wherein, under control of the software, the occupancy sensor is configured to process the information received from the sensors to confirm occupancy or non-occupancy.

9. An occupancy sensor as claimed in any of Claims 5 to 8 when dependent on Claim 4, wherein the occupancy sensor is configured to wirelessly transmit a signal regarding occupancy only when it is determined by the software that the occupancy state has changed.

10. An occupancy sensor as claimed in any preceding claim, wherein the IR sensor and PIR sensor face in the same direction and/or wherein all of the components are housed together in a self-contained housing (2).

11. An occupancy sensor as claimed in any preceding claim in combination with a desk, the occupancy sensor being arranged under the surface of the desk (6) with the PIR and IR sensors facing in the direction of the user sitting at the desk.

12. An occupancy sensor as claimed in Claim 11, wherein the IR sensor is configured such that its field of view is below the desk surface out beyond the rear edge of the desk (7) surface by a predetermined distance.

13. An automated occupancy monitoring system comprising one or more occupancy sensors (1) as claimed in any preceding claim and at least one data gathering unit (11), the data gathering unit and the occupancy sensor being arranged to be in wireless communication with one another.

## Patentansprüche

1. Ein Anwesenheitssensor (1), **dadurch gekennzeichnet, dass** er Folgendes umfasst: einen Passiv-Infrarot-Sensor, PIR-Sensor, der dazu konfiguriert ist, Werte zu sensieren, die anzeigen, wenn sich eine Person einem Anwesenheitssensor nähert oder von diesem weg bewegt, und einen Infrarot-Sensor, IR-Sensor, der dazu konfiguriert ist, die Präsenz oder Abwesenheit von warmen Körpern zu detektieren, wobei der Anwesenheitssensor konfiguriert ist, um eine Anwesenheit oder Nicht-Anwesenheit in Abhängigkeit von Signalen, die sowohl von dem PIR-Sensor als auch dem IR-Sensor gemessen werden, zu bestätigen, wobei eine Hälfte des PIR-Sensors durch Abdecken der Hälfte des PIR-Sensors abgeschirmt ist, wobei ferner ein Umgebungstemperatursensor, der einen Thermistor umfasst, bereitgestellt ist, der angepasst ist, um die Umgebungstemperatur zu überwachen und diese in einen Wert umzuwandeln, der von dem IR-Wert, der durch den IR-Sensor sensiert wird, subtrahiert wird, um Ungenauigkeiten hinsichtlich des IR-Wertes, die durch eine Änderung der Temperatur verursacht werden, zu neutralisieren.

2. Ein Anwesenheitssensor gemäß Anspruch 1, wobei Messungen, die von allen Sensoren vorgenommen werden, zwecks Bestätigung der Anwesenheit oder Nicht-Anwesenheit kombiniert werden.

3. Ein Anwesenheitssensor gemäß einem vorhergehenden Anspruch, der eine oder mehrere Batterien als einzige Stromquelle umfasst.

4. Ein Anwesenheitssensor gemäß einem vorhergehenden Anspruch, der drahtlose Kommunikationsmittel umfasst, die derart angeordnet sind, dass der Anwesenheitssensor ein Signal bezüglich der Anwesenheit an eine entfernte Vorrichtung übertragen kann.

5. Ein Anwesenheitssensor gemäß einem vorhergehenden Anspruch, der einen Mikroprozessor umfasst, der angeordnet ist, um ein Softwarepaket zum Steuern des Betriebs des Anwesenheitssensors auszuführen.

6. Ein Anwesenheitssensor gemäß einem vorhergehenden Anspruch, wobei der Anwesenheitssensor derart konfiguriert ist, dass er gewöhnlich ausgeschaltet ist, sich intermittierend für eine vorbestimmte Zeitdauer einschaltet, die kürzer als die intermittierende Dauer ist, während der er ausgeschaltet ist, um die durch die Sensoren sensierten Signale zu überwachen.

7. Ein Anwesenheitssensor gemäß Anspruch 6, wobei der Anwesenheitssensor dazu konfiguriert ist, sich für 5 Millisekunden oder weniger pro Sekunde einzuschalten.

8. Ein Anwesenheitssensor gemäß einem der Ansprüche 5 bis 7, wobei, gesteuert durch die Software, der Anwesenheitssensor dazu konfiguriert ist, die von den Sensoren empfangenen Informationen zu verarbeiten, um die Anwesenheit oder Nicht-Anwesenheit zu bestätigen.

9. Ein Anwesenheitssensor gemäß einem der Ansprüche 5 bis 8, wenn abhängig von Anspruch 4, wobei der Anwesenheitssensor dazu konfiguriert ist, ein Signal bezüglich der Anwesenheit nur dann drahtlos zu übertragen, wenn durch die Software bestimmt wird, dass sich der Anwesenheitsstatus geändert hat.

10. Ein Anwesenheitssensor gemäß einem vorhergehenden Anspruch, wobei der IR-Sensor und PIR-Sensor in dieselbe Richtung weisen und/oder wobei alle Komponenten zusammen in einem abgeschlossenen Gehäuse (2) untergebracht sind.

11. Ein Anwesenheitssensor gemäß einem vorhergehenden Anspruch in Kombination mit einem Schreibtisch, wobei der Anwesenheitssensor unter der Oberfläche des Schreibtischs (6) angeordnet ist, wobei der PIR- und IR-Sensor in die Richtung des am Schreibtisch sitzenden Benutzers weisen.

12. Ein Anwesenheitssensor gemäß Anspruch 11, wobei der IR-Sensor derart konfiguriert ist, dass sein Sichtfeld unterhalb der Schreibtischoberfläche um eine vorbestimmte Distanz über die Hinterkante der Schreibtisch (7) oberfläche hinaus liegt.

13. Ein automatisches Anwesenheitsüberwachungssystem, das einen oder mehrere Anwesenheitssensoren (1) gemäß einem vorhergehenden Anspruch und mindestens eine Datensammeleinheit (11) umfasst, wobei die Datensammeleinheit und der Anwesenheitssensor angeordnet sind, um miteinander in drahtloser Kommunikation zu stehen.

## Revendications

1. Détecteur de présence (1) **caractérisé par** ce qu'il comporte un capteur PIR (passive infrared sensor - capteur à infrarouge passif) configuré pour détecter des valeurs indiquant une personne qui s'approche ou qui s'éloigne du détecteur de présence, et un capteur IR (infrared sensor - capteur à infrarouge) configuré pour détecter la présence ou l'absence de corps chauds, le détecteur de présence étant configuré pour confirmer la présence ou la non-présence en fonction de signaux mesurés à la fois par le capteur PIR et par le capteur IR, dans lequel une moitié du capteur PIR est protégée en couvrant la moitié du capteur PIR, dans lequel un capteur de température ambiante comportant un thermistor est par ailleurs mis en œuvre, adapté pour surveiller la température ambiante et la convertir en une valeur qui est soustraite de la valeur IR détectée par le capteur IR, pour neutraliser des inexactitudes dans la valeur IR en raison d'un changement de température.

2. Détecteur de présence selon la revendication 1, dans lequel des mesures relevées en provenance de tous les capteurs sont combinées à des fins de confirmation de la présence ou de la non-présence.

3. Détecteur de présence selon l'une quelconque des revendications précédentes, qui comporte une ou plusieurs piles comme unique source d'énergie.

4. Détecteur de présence selon l'une quelconque des revendications précédentes, qui comporte des moyens de communication sans fil, qui sont agencés de telle sorte que le détecteur de présence peut transmettre un signal concernant une présence à un dispositif à distance.

5. Détecteur de présence selon l'une quelconque des revendications précédentes, comportant un microprocesseur, qui est agencé pour exécuter un progiciel à des fins de commande du fonctionnement du détecteur de présence.

6. Détecteur de présence selon l'une quelconque des revendications précédentes, dans lequel le détecteur de présence est configuré de telle sorte qu'il est normalement hors tension, s'allumant de manière intermittente pendant une période de temps prédéterminée, qui est plus courte que la période intermittente pendant laquelle il est hors tension, à des fins de surveillance des signaux détectés par les capteurs.

7. Détecteur de présence selon la revendication 6, dans lequel le détecteur de présence est configuré pour s'allumer pendant 5 millisecondes ou moins par seconde.

8. Détecteur de présence selon l'une quelconque des revendications 5 à 7, dans lequel, sous la commande du logiciel, le détecteur de présence est configuré pour traiter les informations reçues en provenance des capteurs pour confirmer la présence ou la non-présence.

9. Détecteur de présence selon l'une quelconque des revendications 5 à 8, quand dépendantes de la revendication 4, dans lequel le détecteur de présence est configuré pour transmettre sans fil un signal se rapportant à la présence uniquement quand il est déterminé par le logiciel que le statut de présence a changé.

10. Détecteur de présence selon l'une quelconque des revendications précédentes, dans lequel le capteur IR et le capteur PIR sont orientés dans la même direction et/ou dans lequel tous les composants sont logés ensemble dans un boîtier autonome (2).

11. Détecteur de présence selon l'une quelconque des revendications précédentes, en combinaison avec un bureau, le détecteur de présence étant agencé sous la surface du bureau (6), les capteurs PIR et IR étant orientés dans la direction de l'utilisateur assis au bureau.

12. Détecteur de présence selon la revendication 11, dans lequel le capteur IR est configuré de telle sorte que son champ de vision est sous la surface du bureau vers l'extérieur au-delà du bord arrière de la surface du bureau (7) sur une distance prédéterminée.

13. Système de surveillance de présence automatique comportant un ou plusieurs détecteurs de présence (1) selon l'une quelconque des revendications précédentes et au moins une unité de collecte de données (11), l'unité de collecte de données et le détecteur de présence étant agencés pour être en communication sans fil l'un par rapport à l'autre.
